# EUROPEAN PATENT SPECIFICATION

(11) **EP 2 056 608 B1**
(45) Date of publication and mention of the grant of the patent: **07.06.2017**
(21) Application number: 06840707.1
(22) Date of filing: 29.12.2006
(51) Int. Cl.: H04W 28/18, H04W 92/12

(54) **A METHOD FOR ADJUSTING DOWNLINK CONTROLCHANNEL OF HSUPA**
VERFAHREN ZUM EINSTELLEN DES ABWÄRTSSTRECKENSTEUERKANALS VON HSUPA
PROCÉDÉ DE RÉGLAGE DU CANAL DE COMMANDE DE LIAISON DESCENDANTE HSUPA

(30) Priority: 10.08.2006 CN 200610109619
(43) Date of publication of application: 06.05.2009
(73) Proprietor: ZTE Corporation, Guangdong 518057 (CN)
(72) Inventor: HUANG, He, Guangdong 518057 (CN); HUANG, Ming, Guangdong 518057 (CN)
(74) Representative: V.O.
(86) International application number: PCT/CN2006/003677
(87) International publication number: WO 2008/019538

(56) References cited:
- EP-A1- 1 689 127
- EP-A2- 1 351 424
- WO-A1-2006/033636
- WO-A1-2006/036346
- WO-A1-2006/040930
- "Universal Mobile Telecommunications System (UMTS); UTRAN Iub interface Node B Application Part (NBAP) signalling (3GPP TS 25.433 version 6.7.0 Release 6); ETSI TS 125 433", IEEE, LIS, SOPHIA ANTIPOLIS CEDEX, FRANCE, vol. 3-R3, no. V6.7.0, 1 September 2005 (2005-09-01), XP014032626, ISSN: 0000-0001
- NOKIA: "Reconfiguration of E-RGCH at serving cell change", 3GPP DRAFT; R3-050911, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. London, UK; 20050824, 24 August 2005 (2005-08-24), XP050158341, [retrieved on 2005-08-24]
- NORTEL NETWORKS: "E-RNTI allocation on serving change", 3GPP DRAFT; R3-060823_E-RNTI ALLOCATION ON SERVING CHANGE_NBAP_R6R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shanghai, China; 20060515, 15 May 2006 (2006-05-15), XP050159722, [retrieved on 2006-05-15]

## Description

### TECHNICAL FIELD

The present invention relates to high speed uplink packet access (HSUPA) technology, and more particularly, relates to a method for adjusting downlink control channel between radio network controller (RNC) and base station (or Node B) in high speed uplink packet access system.

### BACKGROUND OF THE ART

The technology of high speed uplink packet transmission has been standardized by the 3rd Generation Partnership Project (3GPP) in the R6 protocol. The technology is called HSUPA (high speed uplink packet access), in which three types of downlink control channels, i.e. E-AGCH (E-DCH (Enhanced Dedicated Channel) Absolute Grant Channel), E-RGCH (E-DCH Relative Grant Channel) and E-HICH (E-DCH Hybrid Automatic Repeat Request Indicator Channel) are used.

Wherein, E-AGCH is configured to send E-DCH absolute grant (known as AG) to the mobile communication terminal (known as UE, user equipment) and spread frequency by using channelization code of which the SF (spreading factor) is equal to 256. E-RGCH is configured to send E-DCH relative grant (known as RG, relative grant) to the UE and E-HICH is configured to send HARQ (Hybrid Automatic Repeat Request) acknowledgment indicator (ACK/NACK) of E-DCH to the UE. E-HICH and E-RGCH spread frequency by using the same downlink channelization code of which the SF is equal to 128 and could be distinguished by using different signature sequences (Signature).

According to the present protocol, RNC sends associated configurations such as channel numbers of E-AGCH and E-RGCH/HICH and downlink channelization codes used by said channels to the Node B via Physical Shared Channel Reconfiguration signaling. And the Node B establishes the above three channels according to the received configurations. Signatures used by E-RNTI and E-RGCH/HICH and downlink channelization codes of E-AGCH and E-RGCH/HICH monitored by the UE are assigned for the UE using HSUPA service by the Node B. After the above information is returned via Physical Shared Channel Reconfiguration Response signaling to the RNC by the Node B, the RNC sends the above information to the UE via signaling of Uu interface.

According to the present protocol, the RNC can obtain the information of user number controlled on each E-AGCH and E-RGCH/HICH and initiate adjustment (or change) of channel numbers of E-AGCH and E-RGCH/HICH initiatively.

Before the adjustment of E-AGCH and E-RGCH/HICH is initiated, the RNC should ensure that the UE on the channels to be adjusted will not be affected. The RNC can request the Node B to re-designate an E-AGCH or E-RGCH/HICH for the UE via Radio Link Reconfiguration signaling. However, as the result of E-AGCH or E-RGCH/HICH re-designated by the Node B is out of control of the RNC, it is necessary to design a method, by which the numbers of E-AGCH and E-RGCH/HICH are adjusted according to the current feedback of the Node B, so that exact adjustment of E-AGCH and E-RGCH/HICH can be performed and effect to the present services can be reduced.

It is noted that the article "Universal Mobile Telecommunication Systems (UMTS); UTRAN lub interface Node B Application Part (NBAP) signaling (3GPP TS 25.433 version 6.7.0 Release 6" discloses a high-speed downlink shared channel (HS-DSCH), wherein a Node B initiates a Radio Link Parameter Update procedure by sending a radio link parameter update indication message to a controlling radio network controller (CRNC). It is further noted that publication "NOKIA: Reconfiguration of E-RGCH at serving cell change" discloses allocation of channelization code and signature sequences for E-RGCH/HICH/AGCH technology. It is also noted that publication EP 1 351 424 A2 discloses a radio link (RL) parameter updating method of a high speed downlink packet access (HSDPA) system in a mobile communication system. It is further noted that publication WO 2006/033636 A1 discloses a high speed downlink packet access (HSDPA) reconfigurations synchronized between a UMTS terrestrial radio access network (UTRAN) and a mobile terminal (UE) .

### SUMMARY OF THE INVENTION

To overcome the defects and insufficiencies of the prior art, the object of the present invention is to provide a method for adjusting HSUPA downlink control channel, so that exact adjustments of E-AGCH and E-RGCH/HICH can be performed and effect to the present services can be reduced.

To achieve the above objects, the present invention comprises the following steps:
(1) a Node B sends a HSUPA downlink control channel change indication to a radio network controller;
(2) after receiving the HSUPA downlink control channel change indication, the radio network controller judges whether an adjustment for the current HSUPA downlink control channel is necessary; and if necessary, the radio network controller sends HSUPA downlink control channel change grant message to the Node B, and the Node B performs the adjustment; and if not necessary, then end the steps.

In the step (1), the Node B sends the HSUPA downlink control channel change indication to the radio network controller via radio link parameter update indication.

The HSUPA downlink control channel change indication comprises a uplink enhanced dedicated channel absolute grant channel change indication and a uplink enhanced dedicated channel relative grant channel/uplink enhanced dedicated channel hybrid automatic repeat request indicator channel change indication.

The step (2) comprises:
step (21), after receiving the HSUPA downlink control channel change indication, the radio network controller judges whether the adjustment for the HSUPA current downlink control channel is necessary ; if necessary, then turn to step (22); if not, then end the steps;
step (22), the radio network controller sends the HSUPA downlink control channel change grant message via information element in radio link reconfiguration prepare message and the Node B performs the adjustment.

The HSUPA downlink control channel change grant message comprises a uplink enhanced dedicated channel absolute grant channel change grant message and a uplink enhanced dedicated channel relative grant channel/uplink enhanced dedicated channel hybrid automatic repeat request indicator channel change grant message.

Furthermore, the method for adjusting HSUPA downlink control channel further comprises:
(a) the Node B performs the adjustment according to the HSUPA downlink control channel change grant message received and returns the adjustment result to the radio network controller;
(b) the radio network controller sends the adjustment result of the HSUPA downlink control channel to a user equipment.

Compared with the prior art, the present invention achieves the adjustment of numbers of E-AGCH and E-RGCH/HICH according to the current Node B, so that exact adjustments of E-AGCH and E-RGCH/HICH can be performed and effect to the present services can be reduced..

### BRIEF DESCRIPTION OF THE DRAWINGS

Figure 1 is a block diagram showing the function of the embodiment of the present invention;
Figure 2 is a flow chart of the present invention;
Figure 3 is a block diagram showing the system applied in the present invention;
Figure 4 is a flow chart of the embodiment of the present invention.

### DETAILED DESCRIPTION OF THE PREFERRED EMBODIMENTS

The present invention will be described in details with reference to the attached drawings.

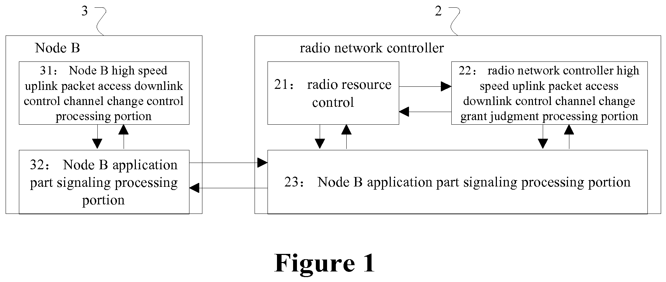

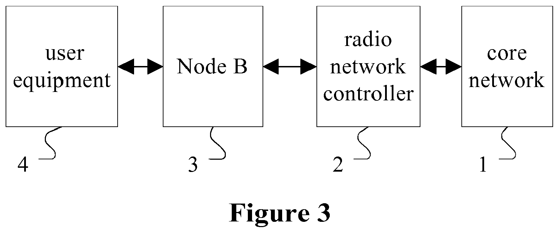

Figure 1 is a block diagram showing the function of the embodiment of the present invention and figure 3 is a block diagram showing the system applied in the present invention. As shown in figure 1, RNC 2 comprises: RRC (radio resource control) processing portion 21, RNC HSUPA downlink control channel change grant judgment processing portion 22 and NBAP processing portion 23. The Node B 3 comprises: Node B HSUPA downlink control channel change control processing portion 31 and NBAP processing portion 32.

The Node B HSUPA downlink control channel change control processing portion 31 sends the information element containing the request for changing the indication of HSUPA downlink control channel to the RNC 2 and returns the adjustment result of HSUPA downlink control channel to the RNC (radio network controller) after receiving the information element containing the grant of permitting to adjust HSUPA downlink control channel sent by the RNC 2. The RRC processing portion 21 processes the protocol between the RNC 2 and the mobile communication terminal (UE) and controls the connection between the RNC 2 and the UE. The RNC HSUPA downlink control channel change grant judgment processing portion 22 processes the information element containing the request for changing the indication of HSUPA downlink control channel sent by Node B 3. After judging the Node B is permitted to adjust, the RNC HSUPA downlink control channel change grant judgment processing portion 22 send the information element containing the grant of permitting to adjust HSUPA downlink control channel to the Node B 3. The NBAP processing portion 23 processes the protocol between the RNC 2 and the Node B 3 and controls the connection between the RNC 2 and the Node B 3.

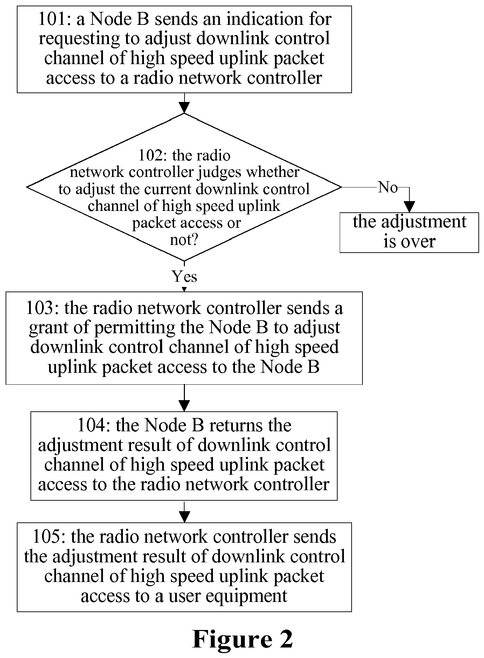

Figure 2 is a flow chart of the present invention. The flow is as follows:
101: A Node B sends the information element for requesting to adjust the current HSUPA downlink control channel, wherein the information element contains an information element containing the indication for requesting the RNC to permit the Node B to adjust the HSUPA downlink control channel that was currently used;
102: after receiving the information element containing the indication for requesting to the adjustment form the Node B, the RNC judges whether to permit the Node B to perform adjustment to the current HSUPA downlink control channel or not. If the adjustment is permitted, turn to step 103 and if not, the steps are over;
103: the information element for permitting the Node B to adjust HSUPA downlink control channel is sent to the Node B, wherein the information element contains an information element containing the grant of permitting the Node B to adjust HSUPA downlink control channel;
104: after receiving the information element containing the grant of permitting to adjust HSUPA downlink control channel sent by the RNC, the Node B adjusts HSUPA downlink control channel that was used currently and returns the adjustment result to the RNC;
105: the RNC sends the adjustment result to the UE after receiving the result returned by the Node B.

The following information elements are added on the basis of the existing protocol in the present invention:
Both of information elements of Uplink Enhanced Dedicated Channel Absolute Grant Channel Code Change Indicator (E-AGCH Code Change Indicator) and change indicator of Uplink Enhanced Dedicated Channel Relative Grant Channel/Uplink Enhanced Dedicated Channel Hybrid Automatic Repeat Request Indicator Channel (E-RGCH/HICH Code Change Indicator) are added in the information element of Uplink Enhanced Dedicated Channel Frequency Division Duplex Update Information (E-DCH FDD Update Information) in Radio Link Parameter Update Indication (RADIO LINK PARAMETER UPDATE INDICATION (FDD)).

The meaning of the information element of E-AGCH Code Change Indicator is to notify the RNC whether to adjust the existing configuration of E-AGCH. If the information element appears, it indicates that the existing configuration of E-AGCH needs to be adjusted. If the information element does not appear, it indicates that the existing configuration of E-AGCH does not need to be adjusted. The format of the information element is as follows:

| IE/Group Name | IE Type and Reference |
|---|---|
| E-AGCH Code Change Indicator | ENUMERATED (E-AGCH Code Change needed) |

The meaning of the information element of E-RGCH/HICH Code Change Indicator is to notify the RNC whether to adjust the existing configuration of E-RGCH/HICH. If the information element appears, it indicates that the existing configuration of E-RGCH/HICH needs to be adjusted. If the information element does not appear, it indicates that the existing configuration of E-RGCH/HICH does not need to be adjusted. The format of the information element is as follows:

| IE/Group Name | IE Type and Reference |
|---|---|
| E- RGCH/HICH Code Change Indicator | ENUMERATED (E-RGCH/HICH Code Change needed) |

Uplink Enhanced Dedicated Channel Absolute Grant Channel Change Grant message (E-AGCH Code Change Grant) and Uplink Enhanced Dedicated Channel Relative Grant Channel/Uplink Enhanced Dedicated Channel Hybrid Automatic Repeat Request Indicator Channel Change Grant message (E-RGCH/HICH Code Change Grant) are added in the information element of Uplink Enhanced Dedicated Channel Frequency Division Duplex Information to Modify message (E-DCH FDD Information to Modify) in Radio Link Reconfiguration Prepare message (RADIO LINK RECONFIGURATION PREPARE (FDD)).

The meaning of the information element of E-AGCH Code Change Grant is to notify the Node B whether this Node B is granted to adjust the existing configuration of E-AGCH. If the information element appears, it indicates that the Node B is granted to adjust the existing configuration of E-AGCH. If the information element does not appear, it indicates that the Node B is not permitted to adjust the existing configuration of E-AGCH. The format of the information element is as follows:

| IE/Group Name | IE Type and Reference |
|---|---|
| E-AGCH Code Change Grant | ENUMERATED (Change Granted) |

The meaning of the information element of E-RGCH/HICH Code Change Grant is to notify the Node B whether this Node B is granted to adjust the existing configuration of E-RGCH/HICH. If the information element appears, it indicates that the Node B is granted to adjust the existing configuration of E-RGCH/HICH. If the information element does not appear, it indicates that Node B is not permitted to adjust the existing configuration of E-RGCH/HICH. The format of the information element is as follows:

| IE/Group Name | IE Type and Reference |
|---|---|
| E- RGCH/HICH Code Change Grant | ENUMERATED (Change Granted) |

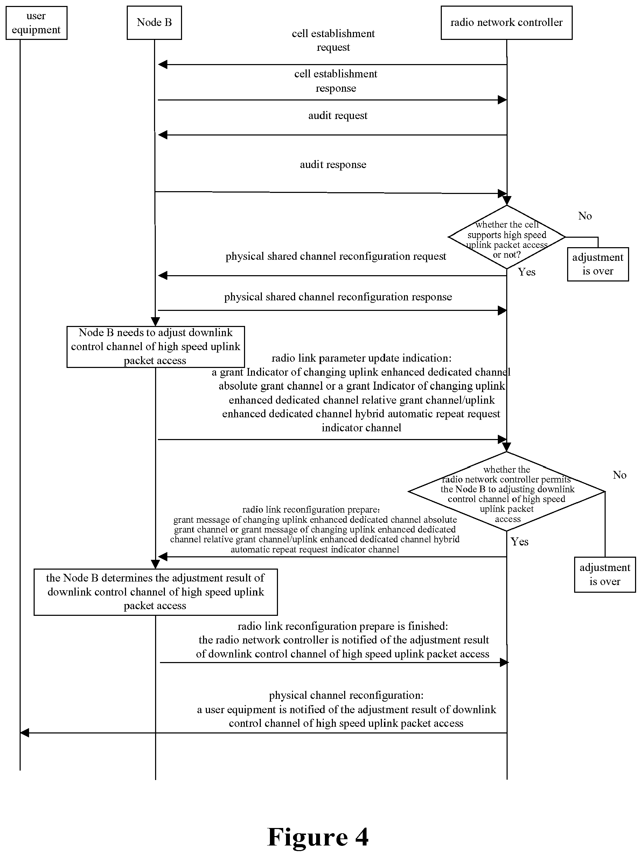

Figure 4 is a flow chart of the embodiment of the present invention. As shown in figure 4, the flow that the RNC adjusts HSUPA downlink control channel used by the Node B is as follows:
(A) after the establishment of a cell, if it is found by auditing that the Node B supports HSUPA function, the RNC notifies the Node B of associated configurations such as channel numbers of E-AGCH and E-RGCH/HICH and downlink channelization codes used by means of Physical Shared Channel Reconfiguration; if it is not found that the Node B supports HSUPA function, the steps are finished;
(B) if it is necessary to adjust the existing configuration of E-AGCH or E-RGCH/HICH, the Node B sends E-AGCH Code Change Indicator or E-RGCH/HICH Code Change Indicator to the RNC via RADIO LINK PARAMETER UPDATE INDICATION and requests the RNC to grant the Node B to adjust E-AGCH or E-RGCH/HICH that currently used by Radio Link; the above two information elements are independent from each other and do not affect each other;
(C) after receiving E-AGCH Code Change Indicator or E-RGCH/HICH Code Change Indicator, the RNC judges whether to permit the Node B to adjust E-AGCH or E-RGCH/HICH monitored by the present service; if E-AGCH or E-RGCH/HICH monitored by the present service is permitted to be modified, processes to step D, otherwise the adjust flow is over;
(D) the RNC sends E-AGCH Code Change Grant or E-RGCH/HICH Code Change Grant to the Node B via E-DCH FDD Information to Modify information element in RADIO LINK RECONFIGURATION PREPARE(FDD) message and permits the Node B to perform the adjustment; the above two information elements are independent from each other and do not affect each other;
(E) after receiving E-AGCH Code Change Grant or E-RGCH/HICH Code Change Grant, the Node B adjusts E-AGCH or E-RGCH/HICH being monitored by the present service; the content of adjustment comprises: if E-AGCH is to be adjusted, E-AGCH currently dispatching the service is adjusted; if E-RGCH/HICH is to be adjusted, the content of adjustment comprises: E-RGCH/HICH monitored by the service and Signature; and the adjustment result is returned to the RNC via E-DCH FDD DL Control Channel Information in Radio Link Reconfiguration Ready;
(F) after receiving the adjustment result in E-DCH FDD DL Control Channel Information of Radio Link Reconfiguration Ready, the RNC sends the adjustment result and the time when the adjusting actives to the UE by means of PHYSICAL CHANNEL RECONFIGURATION.

Of course, the present invention also has various embodiments, according to the present invention, those skilled in the art can make various modifications and alterations without departing from the spirit and the essential of the present invention, and the corresponding modifications and alterations are within the scope of the appended claims.

## Claims

1. A method for adjusting a HSUPA downlink control channel, **characterized in**, comprising the following steps:
(1) a Node B (3) sends a HSUPA downlink control channel change indication to a radio network controller (2);
(2) after receiving the HSUPA downlink control channel change indication, the radio network controller (2) judges whether an adjustment for the current HSUPA downlink control channel is necessary; and if necessary, the radio network controller (2) sends HSUPA downlink control channel change grant message to the Node B (3), and the Node B (3) performs the adjustment; and if not necessary, then end the steps.

2. A method according to the method for adjusting HSUPA downlink control channel in claim 1, **characterized in**, in the step (1), the Node B (3) sends the HSUPA downlink control channel change indication to the radio network controller (2) via radio link parameter update indication.

3. A method according to the method for adjusting HSUPA downlink control channel in claim 1 or 2, **characterized in**, the HSUPA downlink control channel change indication comprises a uplink enhanced dedicated channel absolute grant channel change indication and a uplink enhanced dedicated channel relative grant channel/uplink enhanced dedicated channel hybrid automatic repeat request indicator channel change indication.

4. A method according to the method for adjusting HSUPA downlink control channel in claim 1, **characterized in**, the step (2) comprises:
(21) after receiving the HSUPA downlink control channel change indication, the radio network controller (2) judges whether the adjustment for the HSUPA current downlink control channel is necessary ; if necessary, then turn to step (22); if not, then end the steps;
(22) the radio network controller (2) sends the HSUPA downlink control channel change grant message via information element in radio link reconfiguration prepare message and the Node B (3) performs the adjustment.

5. A method according to the method for adjusting HSUPA downlink control channel in claim 4, **characterized in**, the HSUPA downlink control channel change grant message comprises a uplink enhanced dedicated channel absolute grant channel change grant message and a uplink enhanced dedicated channel relative grant channel/uplink enhanced dedicated channel hybrid automatic repeat request indicator channel change grant message.

6. A method according to the method for adjusting HSUPA downlink control channel in claim 4 or 5, **characterized in**, the method further comprises:
(a) the Node B (3) performs the adjustment according to the HSUPA downlink control channel change grant message received and returns the adjustment result to the radio network controller (2);
(b) the radio network controller (2) sends the adjustment result of the HSUPA downlink control channel to a user equipment (4).

7. A radio network controller (2) arranged for performing the steps of:
- judging whether an adjustment for the current HSUPA downlink control channel is necessary when a HSUPA downlink control channel change indication is received; and
- if necessary, sending a HSUPA downlink control channel change grant message to a Node B (3).

8. A computer program product for adjusting a HSUPA downlink control channel, which computer program product comprises instructions for causing a processor to perform the steps of:
(1) a Node B (3) sends a HSUPA downlink control channel change indication to a radio network controller (2);
(2) after receiving the HSUPA downlink control channel change indication, the radio network controller (2) judges whether an adjustment for the current HSUPA downlink control channel is necessary; and if necessary, the radio network controller (2) sends HSUPA downlink control channel change grant message to the Node B (3), and the Node B (3) performs the adjustment; and if not necessary, then end the steps.

## Patentansprüche

1. Verfahren zum Einstellen eines HSUPA-Abwärtsstreckensteuerkanals, **dadurch gekennzeichnet, dass** es folgende Schritte umfasst:
(1) ein Knoten B (3) sendet eine HSUPA-Abwärtsstreckensteuerkanal-Änderungsanzeige an einen Funknetzcontroller (2);
(2) nach dem Empfangen der HSUPA-Abwärtsstreckensteuerkanal-Änderungsanzeige beurteilt der Funknetzcontroller (2), ob eine Einstellung für den aktuellen HSUPA-Abwärtsstreckensteuerkanal erforderlich ist; und, falls erforderlich, sendet der Funknetzcontroller (2) eine HSUPA-Abwärtsstreckensteuerkanal-Änderungserlaubnisnachricht an den Knoten B (3) und der Knoten B (3) führt die Einstellung durch; und, falls nicht erforderlich, enden dann die Schritte.

2. Verfahren nach dem Verfahren zum Einstellen eines HSUPA-Abwärtsstreckensteuerkanals in Anspruch 1, **dadurch gekennzeichnet, dass** in Schritt (1) der Knoten B (3) die HSUPA-Abwärtsstreckensteuerkanal-Änderungsanzeige über Funkverbindungsparameter-Aktualisierungsanzeige an den Funknetzcontroller (2) sendet.

3. Verfahren nach dem Verfahren zum Einstellen des HSUPA-Abwärtsstreckensteuerkanals in Anspruch 1 oder 2, **dadurch gekennzeichnet, dass** die HSUPA-Abwärtsstreckensteuerkanal-Änderungsanzeige eine absolute EDCH (engl. Enhanced Uplink Dedicated Channel)-Kanaländerungserlaubnisanzeige und eine relative EDCH/EDCH HARQ (engl. Hybrid Automatic Repeat Request) Kanaländerungserlaubnisanzeige umfasst.

4. Verfahren nach dem Verfahren zum Einstellen des HSUPA-Abwärtsstreckensteuerkanals in Anspruch 1, **dadurch gekennzeichnet, dass** Schritt (2) Folgendes umfasst:
(21) nach dem Empfangen der HSUPA-Abwärtsstreckensteuerkanal-Änderungsanzeige beurteilt der Funknetzcontroller (2), ob die Einstellung für den aktuellen HSUPA-Abwärtsstreckensteuerkanal erforderlich ist; falls erforderlich, wird zu Schritt (22) übergegangen; andernfalls werden die Schritte beendet;
(22) der Funknetzcontroller (2) sendet die HSUPA-Abwärtsstreckensteuerkanal-Änderungserlaubnisnachricht über ein Informationselement in der Funkverbindungsrekonfiguration-Vorbereitungsnachricht, und der Knoten B (3) führt die Einstellung durch.

5. Verfahren nach dem Verfahren zum Einstellen des HSUPA-Abwärtsstreckensteuerkanals in Anspruch 4, **dadurch gekennzeichnet, dass** die HSUPA-Abwärtsstreckensteuerkanal-Anderungserlaubnisnachricht eine absolute EDCH-Kanaländerungserlaubnisnachricht und eine relative EDCH/EDCH HARQ (engl. Hybrid Automatic Repeat Request) Kanaländerungserlaubnisanzeige umfasst.

6. Verfahren nach dem Verfahren zum Einstellen des HSUPA-Abwärtsstreckensteuerkanals in Anspruch 4 oder 5, **dadurch gekennzeichnet, dass** das Verfahren ferner Folgendes umfasst:
(a) der Knoten B (3) führt die Einstellung gemäß der empfangenen HSUPA-Abwärtsstreckensteuerkanal-Änderungserlaubnisnachricht durch und gibt das Einstellungsergebnis an den Funknetzcontroller (2) zurück;
(b) der Funknetzcontroller (2) sendet das Einstellungsergebnis des HSUPA-Abwärtsstreckensteuerkanals an eine Benutzerausrüstung (4) zurück.

7. Funknetzcontroller (2), angeordnet zur Ausführung folgender Schritte:
- Beurteilen, ob eine Einstellung für den aktuellen HSUPA-Abwärtsstreckensteuerkanal erforderlich ist, wenn eine HSUPA-Abwärtsstreckensteuerkanal-Änderungsanzeige empfangen wird; und
- falls erforderlich, Senden einer HSUPA-Abwärtsstreckensteuerkanal-Anderungsgewährungsnachricht an einen Knoten B (3).

8. Computerprogrammprodukt zum Einstellen eines HSUPA-Abwärtsstreckensteuerkanals, welches Computerprogrammprodukt Befehle umfasst, die einen Prozessor veranlasst, folgende Schritte auszuführen:
(1) ein Knoten B (3) sendet eine HSUPA-Abwärtsstreckenkanal-Änderungsanzeige an einen Funknetzcontroller (2);
(2) nach dem Empfangen der HSUPA-Abwärtsstreckensteuerkanal-Änderungsanzeige beurteilt der Funknetzcontroller (2), ob eine Einstellung für den aktuellen HSUPA-Abwärtsstreckensteuerkanal erforderlich ist; und, falls erforderlich, sendet der Funknetzcontroller (2) eine HSUPA-Abwärtsstreckensteuerkanal-Änderungsgewährungsnachricht an den Knoten B (3), und der Knoten B (3) führt die Einstellung aus; und, falls nicht erforderlich, dann enden die Schritte.

## Revendications

1. Méthode pour le réglage d'un canal de commande de liaison descendante HSUPA, **caractérisée en ce qu'**elle comprend les étapes suivantes :
(1) un noeud B (3) envoie une indication de changement de canal de commande de liaison descendante HSUPA à un contrôleur de réseau radio (2) ;
(2) après la réception de l'indication de changement de canal de commande de liaison descendante HSUPA, le contrôleur de réseau radio (2) juge si un réglage pour le canal de commande de liaison descendante HSUPA actuel est nécessaire ; et, s'il est nécessaire, le contrôleur de réseau radio (2) envoie un message d'autorisation de changement de canal de commande de liaison descendante HSUPA au noeud B (3), et le noeud B (3) effectue le réglage ; et, s'il n'est pas nécessaire, il termine alors les étapes.

2. Méthode selon la méthode pour le réglage d'un canal de commande de liaison descendante HSUPA dans la revendication 1, **caractérisée en ce que**, dans l'étape (1), le noeud B (3) envoie l'indication de changement de canal de commande de liaison descendante HSUPA au contrôleur de réseau radio (2) par le biais d'une indication de mise à jour de paramètre de liaison radio.

3. Méthode selon la méthode pour le réglage d'un canal de commande de liaison descendante HSUPA dans la revendication 1 ou 2, **caractérisée en ce que** l'indication de changement de canal de commande de liaison descendante HSUPA comprend une indication de changement de canal d'autorisation absolue de canal dédié amélioré de liaison montante et une indication de changement de canal d'indicateur de demande de répétition automatique hybride de canal d'autorisation relative de canal dédié amélioré de liaison montante/canal dédié amélioré de liaison montante.

4. Méthode selon la méthode pour le réglage d'un canal de commande de liaison descendante HSUPA dans la revendication 1, **caractérisée en ce que** l'étape (2) comprend :
(21) après la réception de l'indication de changement de canal de commande de liaison descendante HSUPA, le contrôleur de réseau radio (2) juge si le réglage pour le canal de commande de liaison descendante HSUPA actuel est nécessaire ; s'il est nécessaire, il retourne à l'étape (22) ; s'il ne l'est pas, il termine alors les étapes ;
(22) le contrôleur de réseau radio (2) envoie le message d'autorisation de changement de canal de commande de liaison descendante HSUPA par le biais d'un élément d'information dans un message de préparation de reconfiguration de liaison radio et le noeud B (3) effectue le réglage.

5. Méthode selon la méthode pour le réglage d'un canal de commande de liaison descendante HSUPA dans la revendication 4, **caractérisée en ce que** le message d'autorisation de changement de canal de commande de liaison descendante HSUPA comprend un message d'autorisation de changement de canal d'autorisation absolue de canal dédié amélioré de liaison montante et un message d'autorisation de changement de canal d'indicateur de demande de répétition automatique hybride de canal d'autorisation relative de canal dédié amélioré de liaison montante/canal dédié amélioré de liaison montante.

6. Méthode selon la méthode pour le réglage d'un canal de commande de liaison descendante HSUPA dans la revendication 4 ou 5, **caractérisée en ce que** la méthode comprend en outre :
(a) le noeud B (3) effectue le réglage en fonction du message d'autorisation de changement de canal de commande de liaison descendante HSUPA et renvoie le résultat du réglage au contrôleur de réseau radio (2) ;
(b) le contrôleur de réseau radio (2) envoie le résultat de réglage du canal de commande de liaison descendante HSUPA à un équipement utilisateur (4).

7. Contrôleur de réseau radio (2) agencé pour effectuer les étapes suivantes :
- le jugement du fait qu'un réglage pour le canal de commande de liaison descendante HSUPA actuel est nécessaire quand une indication de changement de canal de commande de liaison descendante HSUPA est reçue ; et
- s'il est nécessaire, l'envoi d'un message d'autorisation de changement de canal de commande de liaison descendante HSUPA à un noeud B (3).

8. Produit de programme informatique pour le réglage d'un canal de commande de liaison descendante HSUPA, lequel produit de programme informatique comprend des instructions pour amener un processeur à effectuer les étapes suivantes :
(1) un noeud B (3) envoie une indication de changement de canal de commande de liaison descendante HSUPA à un contrôleur de réseau radio (2) ;
(2) après la réception de l'indication de changement de canal de commande de liaison descendante HSUPA, le contrôleur de réseau radio (2) juge si un réglage pour le canal de commande de liaison descendante HSUPA actuel est nécessaire ; et, s'il est nécessaire, le contrôleur de réseau radio (2) envoie un message d'autorisation de changement de canal de commande de liaison descendante HSUPA au noeud B (3), et le noeud B (3) effectue le réglage ; et, s'il n'est pas nécessaire, il termine alors les étapes.
